**Europäisches Patentamt**

**European Patent Office**

**Office européen des brevets**

(19)

(11) Numéro de publication: **0 064 423**
**A1**

(12) # DEMANDE DE BREVET EUROPEEN

(21) Numéro de dépôt: **82400524.3**

(22) Date de dépôt: **23.03.82**

(51) Int. Cl.³: **F 16 D 65/22**
**F 16 D 51/22**

(30) Priorité: **10.04.81 FR 8107202**

(43) Date de publication de la demande:
**10.11.82 Bulletin 82/45**

(84) Etats contractants désignés:
**AT BE CH DE GB IT LI LU NL SE**

(71) Demandeur: **DECAUVILLE S.A. Société dite:**
**Rue Decauville**
**F-91102 Corbeil Essonnes(FR)**

(72) Inventeur: **Bondoux, Jean Jacques René**
**18 Rue des Cordelières**
**F-75013 Paris(FR)**

(74) Mandataire: **Moncheny, Michel et al,**
**c/o Cabinet Lavoix 2 Place d'Estienne d'Orves**
**F-75441 Paris Cedex 09(FR)**

(54) Frein à tambour perfectionné, notamment pour véhicule poids lourd.

(57) L'invention concerne les freins à tambour à actionnement par came.

L'axe Y-Y de rotation de cette came (19) est situé par rapport à la ligne des centres (V, W) des galets (21, 22) sur lesquels agit la came, du côté opposé à celui où se trouve l'axe du tambour et le profil de cette came est choisi de telle façon que la force d'écartement des segments de frein s'exerce dans les mêmes conditions pour les deux segments. Il en résulte notamment une amélioration sensible de l'efficacité du rendement et de la tenue du frein.

EP 0 064 423 A1

./...

FIG.3

1

Frein à tambour perfectionné, notamment pour
véhicule poids lourd.-

La présente invention concerne les freins à tambour pour véhicules automobiles et notamment pour véhicules poids
lourds ou de transport en commun.

On sait que de tels freins à tambours comprennent
un tambour solidaire d'un moyeu de roue ou autre élément rotatif
et deux segments ou mâchoires de freinage portant des garnitures
de friction et coopérant avec la paroi interne cylindrique du tambour.
Ces deux segments sont articulés par une de leurs extrémités sur
un bâti fixe et ont leurs autres extrémités qui peuvent être écartées
l'une de l'autre soit au moyen de poussoirs se déplaçant dans un cylindre récepteur, soit au moyen d'une came elle-même actionnée
par un levier relié au piston d'un cylindre récepteur.

C'est à ce dernier type de dispositif d'actionnement
que l'invention se rapporte.

Dans les agencements connus, la came qui agit sur
les deux extrémités mobiles des segments de freins a une forme en
S et elle est agencée de façon symétrique par rapport au point par
lequel passe son axe de rotation. En général, cette came agit sur
deux galets de forme cylindrique portés respectivement par les segments de freins et l'axe de rotation de la came se trouve sur la ligne joignant les centres de ces deux galets ou au voisinage de cette
ligne, les points de contact entre cette came et lesdits galets se trouvant disposés de part et d'autre de la ligne des centres précitée.
Du fait de cette disposition, les forces qui s'exercent sur chacun
des deux segments pour provoquer le freinage du tambour ne sont
pas orientées de la même façon pour les deux segments de freins
et il en résulte une répartition irrégulière de l'effort de freinage.

En effet, pour celui des deux segments pour lequel
le point de contact entre le galet et la came est situé par rapport

2

à la ligne des centres précitée du côté opposé à celui où se trouve le centre du tambour, l'effort de serrage est tel que le segment travaille en compression, ce qui entraîne une répartition à peu près régulière de l'effort de freinage entre le segment et le tambour, sur toute la périphérie de ce segment.

Par contre, pour l'autre segment, le point d'application de la force de serrage se trouve disposé par rapport à la ligne des centres définie ci-dessus du même côté que le centre du tambour et la direction de cette force est telle que les efforts de freinage sont plus importants dans les zones d'extrémité du segment que dans la zone centrale. Ce deuxième segment n'est alors utilisé qu'à environ 30% de son efficacité optimale ce qui est néfaste en ce qui concerne l'efficacité du freinage, la tenue des garnitures et le rendement de l'installation, cette liste d'inconvénients n'étant d'ailleurs pas limitative.

Le but de cette invention est de perfectionner un frein à tambour tel que défini en tête de ce mémoire, de façon à éliminer les inconvénients évoqués ci-dessus.

A cet effet, elle a pour objet un frein à tambour comprenant un tambour solidaire d'un moyeu de roue ou autre élément rotatif, et deux segments ou mâchoires de freinage portant des garnitures de friction et coopérant avec la paroi interne cylindrique du tambour, ces deux segments étant articulés par une de leurs extrémités sur un bâti fixe et ayant leurs autres extrémités qui peuvent être écartées l'une de l'autre au moyen d'une came montée de façon à pouvoir tourner autour d'un axe parallèle à l'axe du tambour et agissant sur deux organes d'appui portés, respectivement, par chaque segment, caractérisé en ce que la position de l'axe de rotation de la came et le profil de cette came sont choisis de telle façon que les forces exercées par ladite came

3

sur lesdits organes d'appui lors de son actionnement ont des valeurs à peu près égales et sont dirigées suivant des directions symétriques par rapport à une droite joignant le centre du tambour au centre de la came, ces deux centres étant définis comme la trace, dans un plan de référence, de l'axe du tambour et de l'axe de rotation de la came.

Suivant d'autres caractéristiques :

- les deux points de contact entre la came et lesdits organes d'appui sont à peu près symétriques par rapport à la droite précitée et l'axe de rotation de la came est situé, par rapport à la droite reliant ces deux points de contact, du côté opposé à celui où se trouve l'axe du tambour ;

- l'angle que forment entre elles la droite joignant le centre de la came à un point de contact entre la came et un organe d'appui, et la droite joignant les deux points de contact entre la came et les organes d'appui, est compris entre 13 et 17° et de préférence voisin de 15° ;

- si lesdits organes d'appui sont des galets, et si l'on considère la ligne joignant les centres de ces deux galets, le profil de la came est tel que les points de contact entre ladite came et les galets sont disposés d'un même côté par rapport à la ligne des centres et du côté de cette ligne opposé à celui où se trouve l'axe du tambour ;

- l'axe de rotation de la came est disposé par rapport à ladite ligne des centres du même côté que les deux points de contact entre ladite came et les galets ;

- l'angle que forment entre elles la droite joignant le centre d'un des galets à l'axe de rotation de la came et la ligne des centres des galets est compris entre 10 et 20° et de préférence voisin de 15° ;

- de préférence, les deux portions actives de la

4

came coopérant respectivement avec les deux galets sont constitués par deux arcs d'une courbe en développante de cercle.

L'invention va être décrite plus en détail ci-dessous en se référant au dessin annexé donné uniquement à titre d'exemple et sur lequel :

- la Fig. 1 est une vue en coupe d'un frein à tambour suivant l'invention, la coupe étant effectuée dans un plan perpendiculaire à l'axe du tambour ;

- la Fig. 2 est une vue en coupe suivant la ligne 2-2 de la Fig. 1 ;

- la Fig. 3 est une vue à plus grande échelle d'une came suivant l'invention.

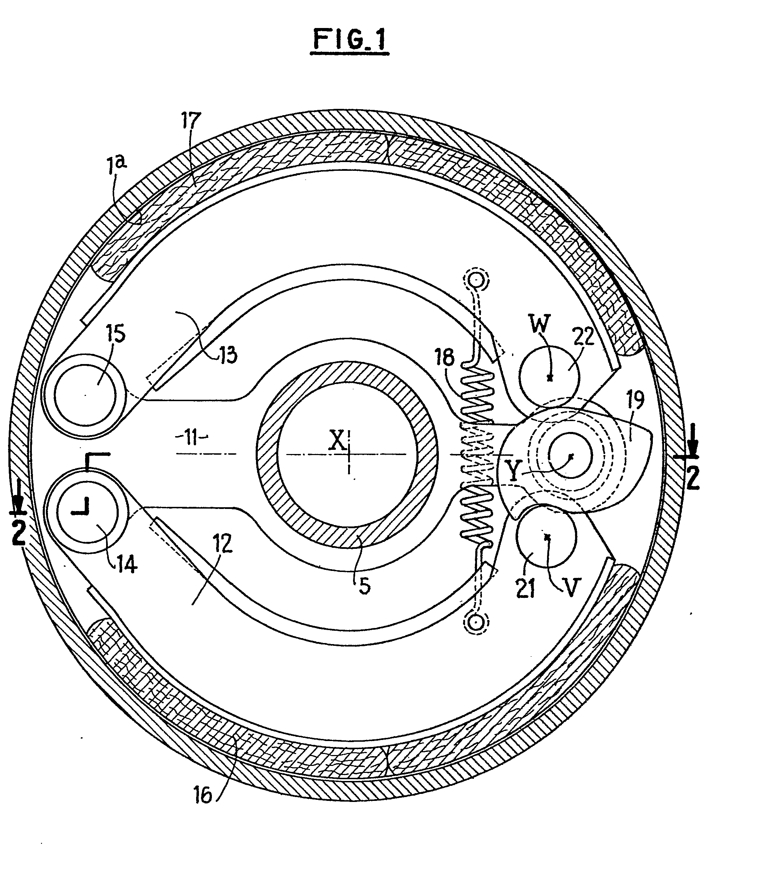

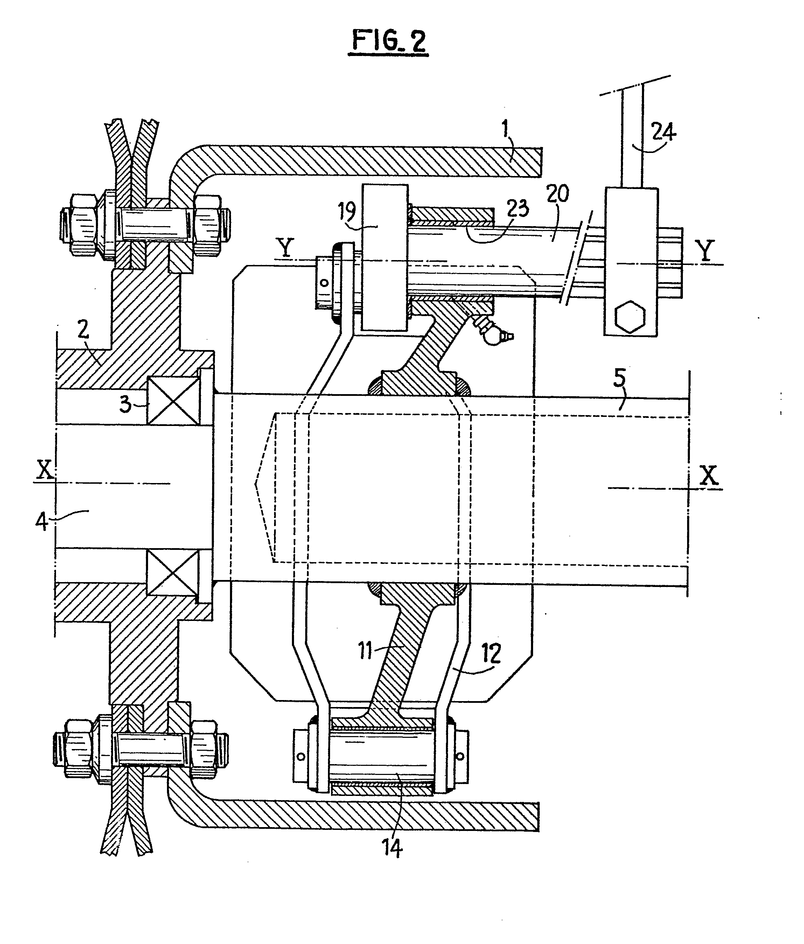

Les Fig. 1 et 2 représentent un frein à tambour, par exemple pour un véhicule poids lourd ou pour un véhicule de transport en commun. Ce frein comprend un tambour 1 d'axe X-X solidaire d'un moyeu de roue 2 monté rotatif par l'intermédiaire de roulements tel que 3 sur une fusée 4 d'essieu 5. Ce tambour constitue la partie rotative qui doit être freinée.

La partie fixe du frein comprend un support fixe 11 soudé, par exemple, sur le moyeu 5 et sur lequel sont articulés deux segments ou mâchoires de freins 12, 13. Ces deux segments sont articulés autour de deux axes 14, 15 au voisinage d'une de leurs extrémités. Ils portent des garnitures 16, 17 coopérant avec la paroi interne 1$^a$ du tambour.

Ils peuvent être actionnés à partir de leurs autres extrémités au moyen d'une came 19 portée par un arbre 20 d'axe Y-Y et qui coopère avec deux galets 21, 22 comportant une garniture anti-friction ou montés rotatifs autour de leurs axes respectifs V et W. La came agit à l'encontre d'un ressort de rappel 18.

5

L'arbre 20 monté rotatif dans un palier 23 du support 11 est solidaire d'un levier d'actionnement 24 lui-même relié, de façon connue en soi, à un cylindre récepteur de frein, non représenté.

En position desserrée du frein, la came est au contact en deux points $A_1$, $B_1$ avec les galets 21, 22.

Comme cela est visible sur la Fig.1, l'axe de rotation Y-Y de la came, parallèle à l'axe X-X du tambour et aux axes V et W des deux galets 21, 22 est disposé par rapport à la ligne joignant les points $A_1$ et $B_1$ du côté de cette ligne opposé à celui où se trouve le centre ou l'axe du tambour. De préférence, les angles $\underline{a}$ reportés sur le dessin et formés entre la ligne des centres VW (ou la droite $A_1$, $B_1$) et les droites joignant les centres VW des galets au centre (ou à l'axe) de rotation Y de la came sont compris entre 13 et 17° et de préférence voisins de 15°, dans le cas d'un tambour de frein ayant un diamètre intérieur voisin de 420mm. Dans l'exemple représenté, on suppose que les deux galets 21 et 22 ont un diamètre $D_1$ de 40mm et que leurs axes sont distants de 102,5mm.

Les points de contact $A_1$, $B_1$ entre la came 19 et les deux galets 21, 22 étant fixés, la came est déterminée de la façon suivante : cette came comprend deux parties actives identiques $19^a$, $19^b$ s'étendant à partir des deux points précités et décalées angulairement d'un angle de 150° autour de l'axe Y, c'est à dire de l'angle formé entre les droites $YA_1V$ et $YB_1W$. Ces deux parties actives sont reliées par deux zones de liaison $19^c$, $19^d$ dont le profil est simplement choisi de façon à ne pas interférer avec le galet adjacent lors de la rotation de la came.

La courbe constituant une partie active, $19^a$ par exemple, est tracée de la façon suivante : on trace à partir du point $A_1$ la tangente à un cercle de base de centre Y et de

diamètre $D_2$. $D_2$ est ici choisi égal à 28mm. Ce cercle va servir à déterminer les autres points de la courbe : si $K_1$ désigne la longueur du segment compris entre $A_1$ et le point $a_1$ de contact entre la tangente précitée et le cercle de base, un point courant de la courbe est déterminé de la façon suivante : pour un angle $\alpha$ mesuré en degrés à partir du rayon $Ya_1$ on trace le rayon correspondant $Ya_\alpha$ , on trace la tangente au point $a_\alpha$ au cercle de base et l'on mesure sur cette tangente une distance $K_\alpha = a_\alpha \; A_\alpha = K_1 + \dfrac{2\pi.\alpha}{360} . \dfrac{D_2}{2}$ pour obtenir le point $A_\alpha$ .

La courbe obtenue est une développante de cercle. Dans l'exemple choisi, en faisant varier $\alpha$ de 15 en 15° à partir du rayon $Ya_1$, on obtient pour les différents points $A_1$, $A_2 \ldots A_8$. les valeurs suivantes :

$$K_1 = 28,5$$
$$K_2 = 32,16$$
$$K_3 = 35,82$$
$$K_4 = 39,48$$
$$K_5 = 43,19$$
$$K_6 = 46,80$$
$$K_7 = 50,46$$
$$K_8 = 59,12$$

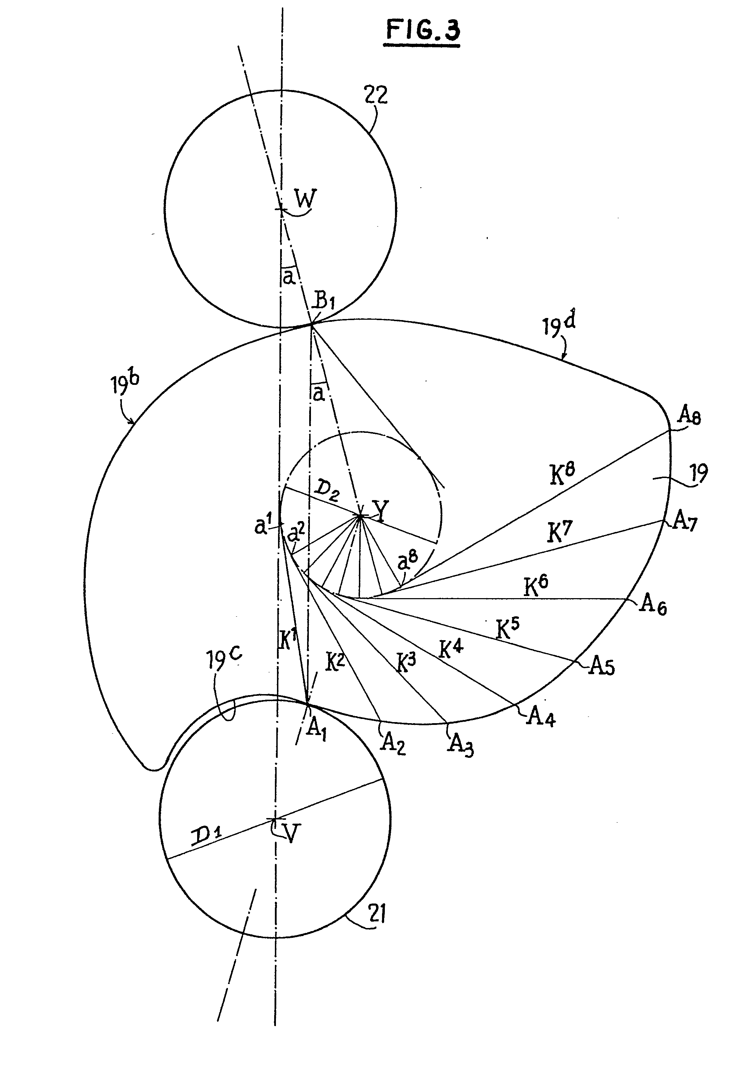

Le fonctionnement du dispositif que l'on vient de décrire est très simple. Il ne diffère pas dans son principe de celui d'un frein habituel étant donné que la rotation de la came 19 autour de son axe Y-Y, dans le sens des aiguilles d'une montre en considérant la Fig. 3, provoque un écartement des deux extrémités libres des segments ou mâchoires de freins, à l'encontre de l'action du ressort de rappel 18. Le profil de la came est calculé de façon à obtenir une progressivité de l'écartement des mâchoires et par conséquent de l'effort de freinage et un rappel rapide sous l'action du ressort 18.

On constate qu'étant donné la position de l'axe de rotation Y-Y de la came et le profil choisi pour cette dernière, les deux points d'action de la came sur les galets 21,22 sont situés d'un même côté par rapport à la ligne des centres V W de ces galets, de sorte que les forces d'écartement des mâchoires ont la même valeur et s'exercent dans des directions symétriques par rapport à la droite XY joignant le centre du tambour au centre de la came. Les directions de ces forces sont telles que les deux segments de freins fonctionnent dans des conditions optimales, contrairement à ce qui se produit dans les dispositifs connus. Il en résulte de nombreux avantages :

- le freinage est amélioré puisque les deux segments agissent avec la même efficacité ;

- le rendement du frein est accru ;

- la tenue des garnitures est sensiblement améliorée, étant donné la meilleure répartition des efforts de freinage. Dans le même sens, le risque d'ovalisation de la paroi interne du tambour est réduit. Il en résulte également une meilleure tenue aux freinages répétés, ce qui constitue un critère important d'appréciation de l'efficacité et de la qualité des freins ;

- le temps de réponse du frein est plus faible ;

- on peut, à caractéristiques de freinage égales diminuer le couple exercé par le levier de frein et par conséquent diminuer la course du cylindre récepteur ou autre organe équivalent.

Il est également à noter que tous ces avantages sont obtenus sans complication ni augmentation du coût du dispositif. Par ailleurs, des variantes peuvent intervenir dans la détermination du profil de la came et la position des différents éléments, en fonction des conditions particulières, sans pour autant sortir du cadre de ce brevet.

8

- REVENDICATIONS -

1 - Frein à tambour comprenant un tambour solidaire d'un moyeu de roue ou autre élément rotatif et deux segments ou mâchoires de freinage portant des garnitures de friction et coopérant avec la paroi interne cylindrique du tambour. ces deux segments étant articulés par une de leurs extrémités sur un bâti fixe et ayant leurs autres extrémités qui peuvent être écartées l'une de l'autre au moyen d'une came montée de façon à pouvoir tourner autour d'un axe parallèle à l'axe du tambour et agissant sur deux organes d'appui portés, respectivement, par chaque segment, caractérisé en ce que la position de l'axe (Y-Y) de rotation de la came (19) et le profil de cette came sont choisis de telle façon que les forces exercées par ladite came (19) sur lesdits organes d'appui (21, 22) lors de son actionnement ont des valeurs à peu près égales et sont dirigées suivant des directions symétriques par rapport à une droite joignant le centre (X) du tambour au centre (Y) de la came, ces deux centres étant définis comme la trace, dans un plan de référence, de l'axe du tambour et de l'axe de rotation de la came.

2 - Frein à tambour suivant la revendication 1, caractérisé en ce que les deux points de contact entre la came (19) et lesdits organes d'appui (21, 22) sont à peu près symétriques par rapport à la droite précitée et l'axe de rotation (Y-Y) de la came est situé, par rapport à la droite reliant ces deux points de contact, du côté opposé à celui où se trouve l'axe (X-X) du tambour.

3 - Frein à tambour suivant l'une quelconque des revendications 1 et 2, caractérisé en ce que l'angle (a) que forment entre elles la droite joignant le centre (Y) de la came

à un point $(A_1, B_1)$ de contact entre la came (19) et un organe d'appui (21, 22), et la droite joignant les deux points de contact $(A_1, B_1)$ entre la came et les organes d'appui, est compris entre 13 et 17° et de préférence voisin de 15°.

4 - Frein à tambour suivant la revendication 1, caractérisé en ce que si lesdits organes d'appui (21, 22) sont des galets, et si l'on considère la ligne joignant les centres (V, W) de ces deux galets, le profil de la came (19) est tel que les points de contact entre ladite came et les galets sont disposés d'un même côté par rapport à la ligne des centres (V, W) et du côté de cette ligne opposé à celui où se trouve l'axe (X-X) du tambour.

5 - Frein à tambour suivant la revendication 4, caractérisé en ce que l'axe de rotation de la came est disposé par rapport à ladite ligne des centres du même côté que les deux points de contact entre ladite came et les galets.

6 - Frein à tambour suivant la revendication 4, caractérisé en ce que l'angle (a) que forment entre elles la droite joignant le centre d'un (V, W) des galets à l'axe de rotation (Y) de la came et la ligne des centres (V, W) des galets est compris entre 10 et 20° et de préférence voisin de 15°.

7 - Frein à tambour suivant l'une quelconque des revendications 1 à 6, caractérisé en ce que de préférence, les deux portions actives ($19^a$, $19^b$) de la came coopérant respectivement avec les deux galets (21, 22) sont constituées par deux arcs d'une courbe en développante de cercle.

FIG.1

## FIG. 2

FIG.3

Office européen
des brevets

RAPPORT DE RECHERCHE EUROPEENNE

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl. 3) |
|---|---|---|---|
| A | FR - A - 832 508 (MAZINGUE) | 1 et 2 | |
| A | FR - A - 2 252 507 (BERGISCHE ACHSENFABRIK FR. KOTZ & SOHNE) | 1 | F 16 D 65/22 51/22 |
| A | GB - A - 1 589 002 (MAGYAR VAGON-ES GEPGYAR) | 1 | |
| A | FR - A - 1 564 873 (CENTRE DE RECHERCHES DE PONT-A-MOUSSON) | 1 | |
| A | FR - A - 2 051 211 (GIRLING) | 2 | |

------------

DOMAINES TECHNIQUES
RECHERCHES (Int. Cl. 3)

F 16 D

Le present rapport de recherche a ete etabli pour toutes les revendications

| Lieu de la recherche | Date d'achevement de la recherche | Examinateur |
|---|---|---|
| La Haye | 14-07-1982 | BRAEMS |

CATEGORIE DES DOCUMENTS CITES

X : particulierement pertinent a lui seul
Y : particulierement pertinent en combinaison avec un autre document de la meme categorie
A : arriere-plan technologique
O : divulgation non-ecrite
P : document intercalaire

T : theorie ou principe à la base de l'invention
E : document de brevet anterieur, mais publie a la date de depôt ou apres cette date
D : cite dans la demande
L : cite pour d'autres raisons

& : membre de la meme famille, document correspondant